# EUROPEAN PATENT APPLICATION

(11) **EP 4 770 200 A1**
(43) Date of publication of application: **01.07.2026**
(21) Application number: 24875019.2
(22) Date of filing: 07.10.2024
(51) Int. Cl.: H04W 40/22, H04W 40/04, H04W 40/12, H04W 84/12, H04W 88/04, H04W 8/00

(54) **COMMUNICATION RANGE EXTENSION USING RELAY IN WIRELESS LAN SYSTEM**

(30) Priority: 06.10.2023 KR 20230133564; 11.10.2023 KR 20230135283
(71) Applicant: LG ELECTRONICS INC., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR); JANG, Insun, Seoul 06772 (KR)
(74) Representative: Plasseraud IP
(86) International application number: PCT/KR2024/015190
(87) International publication number: WO 2025/075464

(57) **Abstract**

The present disclosure relates to communication range extension using a relay in a wireless LAN system. According to an embodiment of the present disclosure, provided is a method comprising the steps in which: a relay station (STA) receives a first beacon frame from an access point (AP); the relay STA transmits, to an end STA, a second beacon frame including relay transmission notification and at least a portion of information included in the first beacon frame, wherein the relay transmission notification indicates that a frame including the relay transmission notification is transmitted by the relay STA; the relay STA relays one or more frames for association between the AP and the end STA on the basis of the transmission of the second beacon frame including the relay transmission notification; and the relay STA relays data transmission between the AP and the end STA after the AP and the end STA are associated with each other.

## Description

### Technical field

The present disclosure is related to communication range extension using relay in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, to support an extended communication range, signal transmission and reception using a relay may be considered.

### Disclosure of Invention

### Technical Problem

An aspect of the present disclosure is to provide method and apparatus for communication range extension using relay in a WLAN system.

### Solution to Problem

According to an embodiment of the present disclosure, a method is provided, the method comprising: receiving, by a relay station (STA), a first beacon frame from an access point (AP); transmitting, by the relay STA to an end STA, a second beacon frame including at least a part of information included in the first beacon frame and a relay transmission notification, wherein the relay transmission notification informs that a frame including the relay transmission notification is transmitted by the relay STA; relaying, by the relay STA, one or more frames for an association between the AP and the end STA based on transmitting the second beacon frame including the relay transmission notification; and after the AP and the end STA are associated with each other, relaying, by the relay STA, data transmission between the AP and the end STA.

According to an embodiment of the present disclosure, a method is provided, the method comprising: receiving, by an access point (AP), an association request frame of an end station (STA) including a relay transmission notification from a relay STA, wherein the relay transmission notification informs that a frame including the relay transmission notification is transmitted by the relay STA; transmitting, by the AP, an association response frame for the association request frame of the end STA to the relay STA; receiving, by the AP, an acknowledgement (ACK) of the end STA for the association response frame from the relay STA; and after receiving the ACK, performing, by the AP, data transmission with the end STA through the relay STA.

In various embodiments, apparatuses implementing the above methods are provided.

### Advantageous Effect

The present disclosure may have various advantageous effects.

For example, by defining frames and frame exchanges for relay transmission, an AP can perform reliable signal transmission and reception not only for STAs within the AP coverage boundary but also for STAs located at and/or outside the boundary, while also extending throughput and/or the AP communication range.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 shows an example of a multi-link (ML).
FIG. 5 shows a modified example of a transmitting device and/or a receiving device of the present disclosure.
FIG. 6 shows an operation related to UL-MU.
FIG. 7 shows an example of a MAC frame header.
FIG. 8 illustrates an example of relay transmission/operation.
FIG. 9 shows an example of communication range extension using a relay.
FIG. 10 shows an example of a method performed by an STA according to an embodiment of the present disclosure.
FIG. 11 shows an example of a method performed by an AP according to an embodiment of the present disclosure.
FIG. 12 shows an example of an association procedure performed based on a relay by an STA located outside the BSS coverage according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

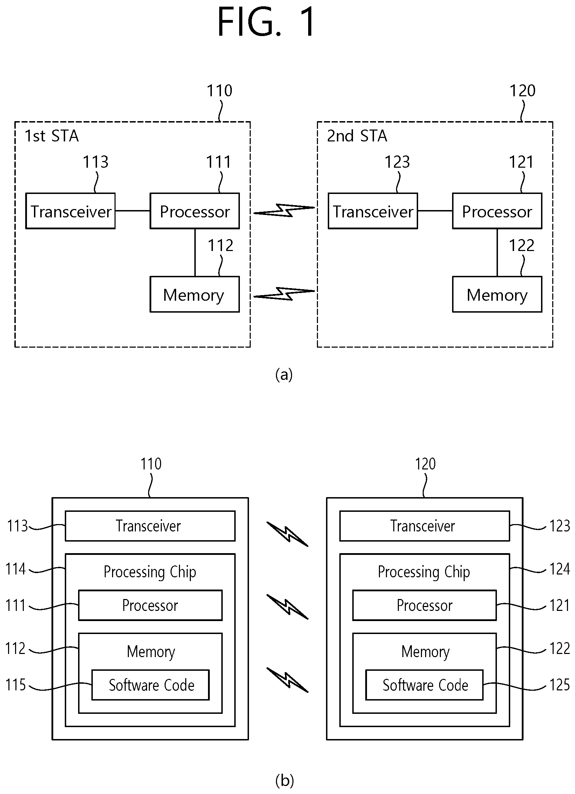

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

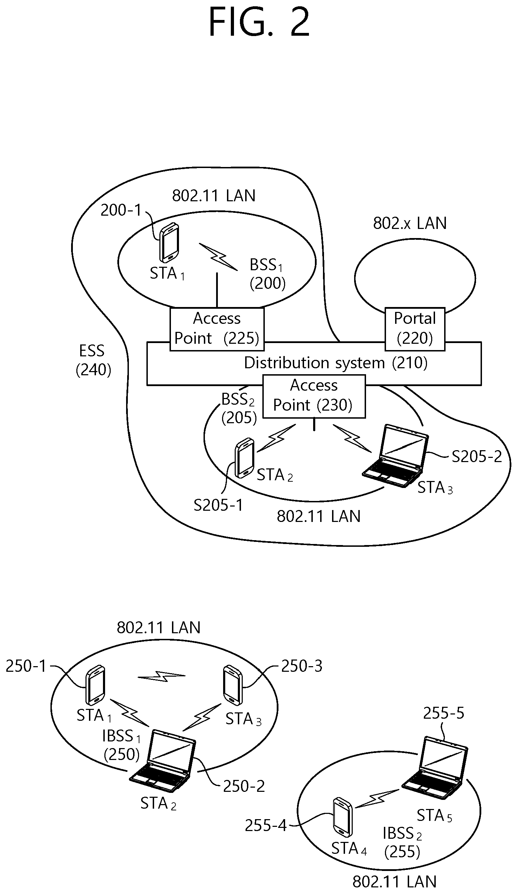

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

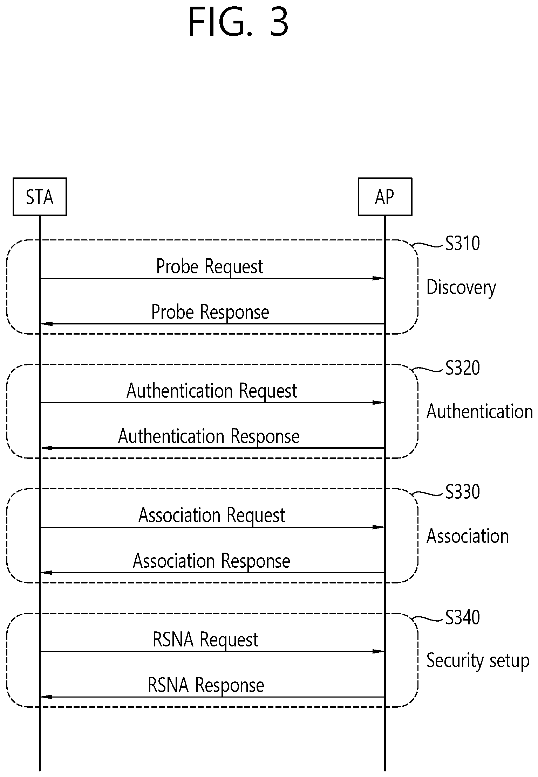

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

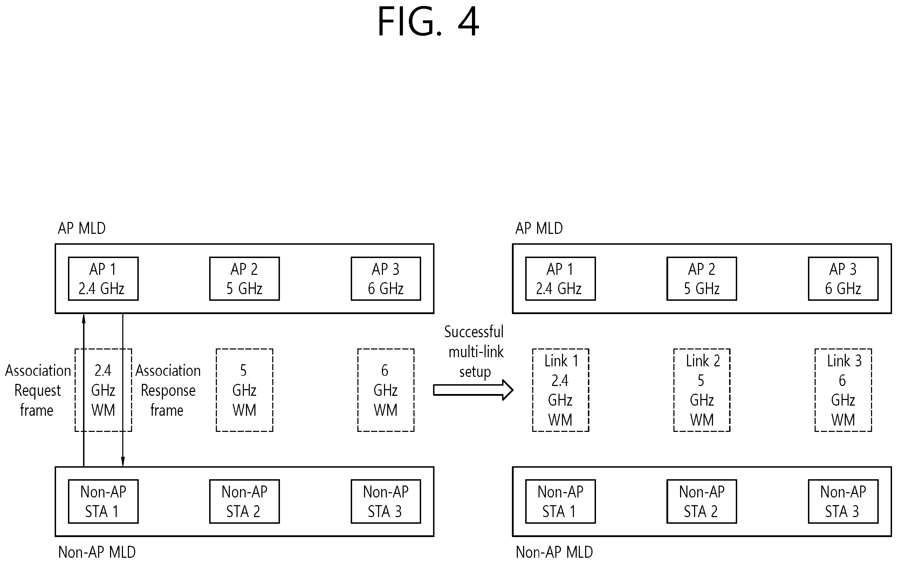

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

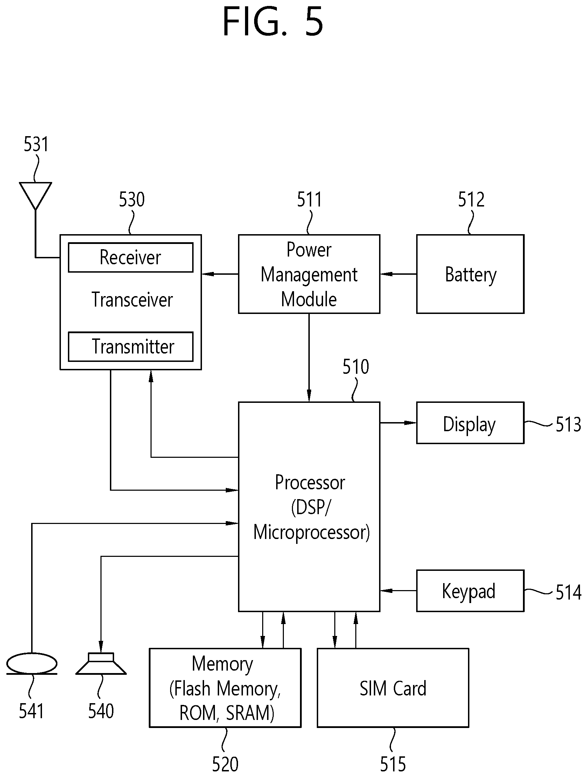

FIG. 5 shows a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor *510* of FIG. 5 can be identical to the processor 111, 121 of FIG. 1. Alternatively, the processor *510* of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor *510.* The keypad 514 receives input to be used by the processor *510.* The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor *510.* The microphone (541) may receive sound-related input to be used by the processor 510.

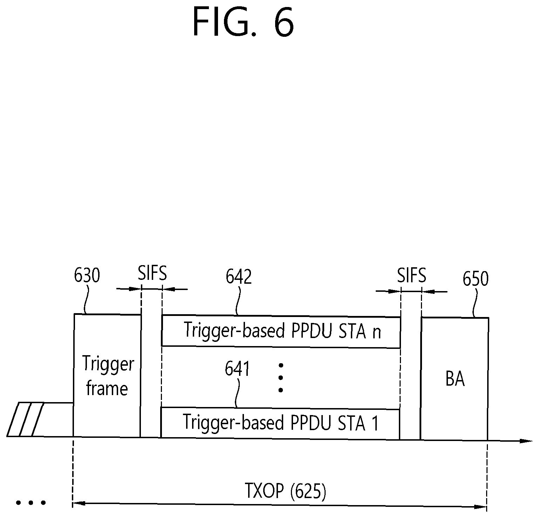

FIG. 6 shows an operation related to UL-MU. As shown, a transmitting STA (e.g., AP) can obtain TXOP 625 by performing channel access through contending (i.e., backoff operation) and transmit trigger frame 630. That is, the transmitting STA (e.g., AP) can transmit PPDU including trigger frame 630. When PPDU including trigger frame is received, trigger-based (TB) PPDU is transmitted after delay of short interframe space (SIFS).

TB PPDU 641, 642 can be transmitted at the same time and transmitted from multiple STA (e.g., user STA) whose AID is indicated in trigger frame 630. ACK frame 650 for TB PPDU can be implemented in various forms. For example, ACK frame 650 for TB PPDU can be implemented in the form of block ACK (BA).

In FIG. 6, transmission(s) of trigger Frame 630, TB PPDU 641, 642 and/or ACK Frame 650 can be performed within TXOP 625.

The structure and types/subtypes of MAC frames are described below.

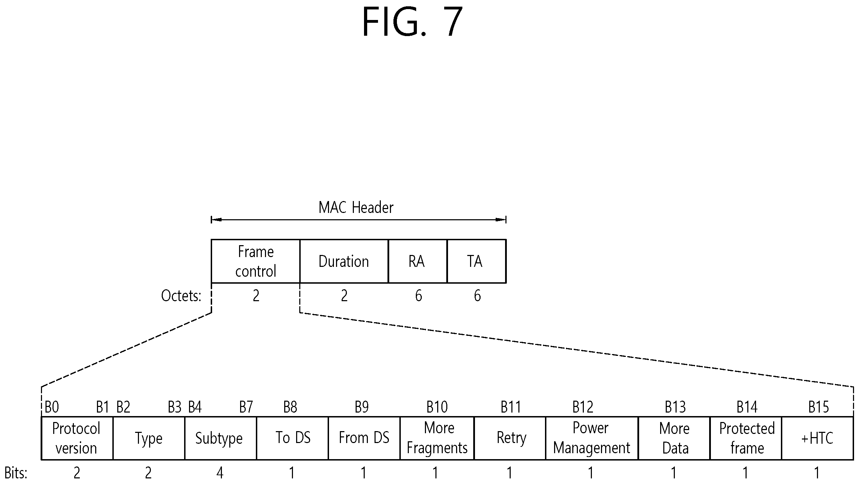

FIG. 7 shows an example of a MAC frame header. As shown, a MAC frame may include a 2-octet frame control field/information, a 2-octet duration field/information, a 6-octet receiver address (RA) field/information, and a 6-octet transmitter address (TA) field/information. As shown in FIG. 7, the four fields may be contiguous. The MAC header of FIG. 7 may be modified in various ways, with new fields inserted between the four fields shown, or at least one of the fields shown may be omitted.

The MAC header shown in FIG. 7 may be positioned at the very beginning of the MAC frame. That is, the MAC frame may include a MAC header as shown in FIG. 7 and a MAC body field/information may be contiguous to the MAC header. A MAC frame including the MAC header of FIG. 7 is inserted/included in the data field of a PPDU (e.g., a UHR PPDU).

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, BlockAck Request (BlockAckReq), BlockAck (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The Frame Control field of the management frame/control frame/data frame may include a To DS subfield and a From DS subfield. For example, the meaning of the combination of To DS and From DS subfield values in the management frame may be as shown in <Table 1> below:

**[Table 1]**

| To DS subfield and From DS subfield values | Meaning |
|---|---|
| To DS = 0, From DS = 0 | All non-QMF Management frames |
| To DS = 1, From DS = 0 | All QMF Management frames |
| To DS = 0, From DS = 1 | This combination is reserved. |
| To DS = 1, From DS = 1 | This combination is reserved. |

Meanwhile, in next-generation wireless LAN systems, signal transmission and reception using relays (i.e., relay operation) may be considered to ensure stable and/or reliable signal transmission regardless of the location of STAs within the BSS, increase signal transmission coverage, and/or eliminate signal inaccessibility. Signal transmission and reception using a relay can be used not only to improve reliability within a BSS but also to extend the signal transmission coverage of the BSS. For relay operation, a relay STA may be required. A relay STA refers to a device that receives a PPDU (e.g., the aforementioned HT/VHT/HE/EHT/UHR-PPDU) from a first STA (e.g., an AP STA) and relays the received PPDU to a second STA (e.g., a non-AP STA).

The relay function/operation/procedure performed by the relay STA in the present disclosure may be implemented in various ways. For example, the relay STA may receive a first PPDU from the first STA and decode a portion of the received first PPDU. For example, the relay STA can decode the PHY preamble (e.g., L-SIG, U-SIG, EHT-SIG, etc.) included in the first PPDU, and decode a part of the MAC frame (e.g., MAC header) included in the data field of the first PPDU. Through this, the relay STA can obtain the frame body of the MAC frame of the first PPDU, and can relay the frame body of the MAC frame to the second STA without performing additional decoding on the frame body of the obtained MAC frame. That is, the relay STA can encode/generate/configure the second PPDU based on the body of the MAC frame, and transmit the second PPDU to the second STA. As a result, the first PPDU and the second PPDU can include the same payload or MAC frame body. For example, the PHY preamble and/or MAC header of the first PPDU received by the relay STA may be identical to or different from the PHY preamble and/or MAC header of the second PPDU transmitted by the relay STA. For example, the relay STA may not decode the MAC frame (i.e., the frame body) other than the MAC header of the first PPDU, or may decode only a portion of it.

The relay STA of the present disclosure may be implemented in various ways.

First, the relay STA of the present disclosure may be implemented in a manner that includes a Relay-STA and a Relay-AP. That is, the relay STA may include a Relay STA that communicates with the Root AP and a Relay AP that communicates with non-APs. In this case, an upper BSS may be defined between the Root AP and the relay STA, and a lower BSS may be defined between the Relay AP and the non-AP. A relay function may be implemented between the Relay STA and the Relay AP within the relay STA.

Second, the relay STA of the present disclosure may be a terminal/device that operates as a non-AP STA (i.e., a user STA). That is, the relay STA of the present disclosure may belong to a BSS defined/configured by an AP STA without newly defining/configuring a lower BSS by itself. The AP STA may assign an ID (e.g., AID) to the relay STA in the same manner as a conventional non-AP STA (i.e., a user STA). That is, the relay STA may be identified like a typical non-AP STA (i.e., a user STA) and may additionally support the relay function/operation/procedure described above. That is, the relay STA may receive a first DL PPDU from an AP STA, obtain a MAC frame body of the first DL PPDU, and relay a second DL PPDU including the obtained MAC frame body to a neighboring non-AP STA. Additionally, the relay STA may receive a first UL PPDU from a neighboring non-AP STA, obtain the MAC frame body of the first UL PPDU, and relay a second UL PPDU including the obtained MAC frame body to the AP STA.

Thirdly, the relay STA of the present disclosure may be implemented based on multiple links. For example, the relay function/operation/procedure described above may be performed based on multiple links, such as those described in FIG. 4 of the present disclosure. That is, a specific non-AP MLD may operate as a relay STA, and in this case, the first PPDU may be received via the first link included in the non-AP MLD. The relay STA may relay the first PPDU received via the first link to another STA via the second link. For example, the first link may operate as a DL link (or UL link), and the second link may operate as a UL link (or DL link).

To facilitate relay implementation and reduce operational complexity, next-generation wireless LAN systems may consider AP-controlled relay transmission/operation.

In this disclosure, an AP-controlled relay STA is referred to as an "AP-controlled Relay STA," or simply ACRS. The ACRS performs relay transmission for data received from an AP within a BSS. The AP may control the ACRS for relay operation. That is, based on control information received from the AP, the ACRS may transmit signals received from the AP to end-users/STAs, or transmit signals received from multiple non-AP STAs to the AP.

For example, the ACRS may be an independent relay device that only performs relay transmission. Alternatively, the ACRS may be a non-AP STA that supports relay operation.

In this disclosure, the operations performed by the ACRS may be performed not only by the ACRS, but also by various relay STAs (e.g., relay STAs not controlled by the AP).

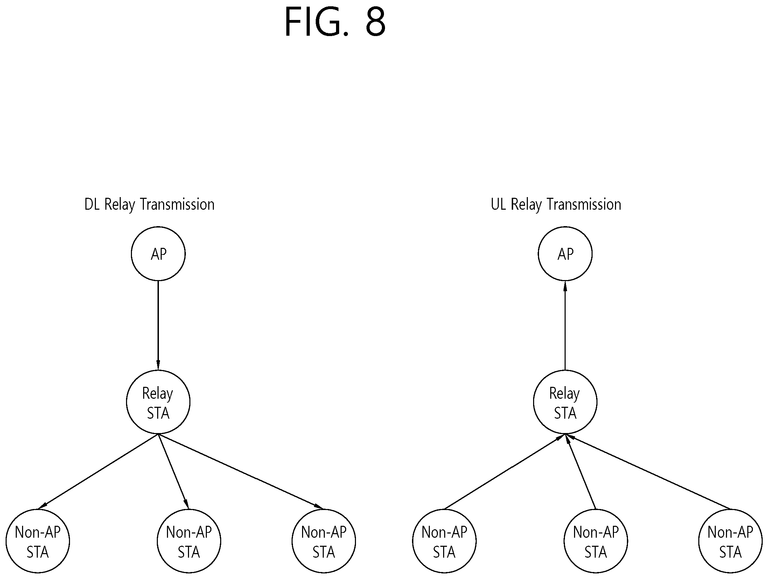

FIG. 8 illustrates an example of relay transmission/operation.

Referring to FIG. 8, in a next-generation wireless LAN system, a relay STA can transmit signals to one or more non-AP STAs located at the BSS edge or extended range, or receive signals from non-AP STAs, through relay operation. Relay operation can be performed using two links (e.g., from the AP to the relay STA and from the relay STA to the non-AP STA (DL relay transmission), or from the non-AP STA to the relay STA and from the relay STA to the AP (UL relay transmission)).

In the present disclosure, a non-AP STA that transmits and receives signals with an AP through a relay STA may be referred to as an end STA or a remote STA. A relay STA may be an AP or a non-AP STA.

A relay STA may be used to perform smooth signal transmission and reception for STAs existing at the coverage boundary and/or outside the boundary of a BSS and to transmit and receive signals by extending the coverage of the BSS. In order to efficiently support not only STAs existing in the BSS coverage but also STAs existing outside the BSS coverage, a method for performing communication range extension when relay transmission and reception is required.

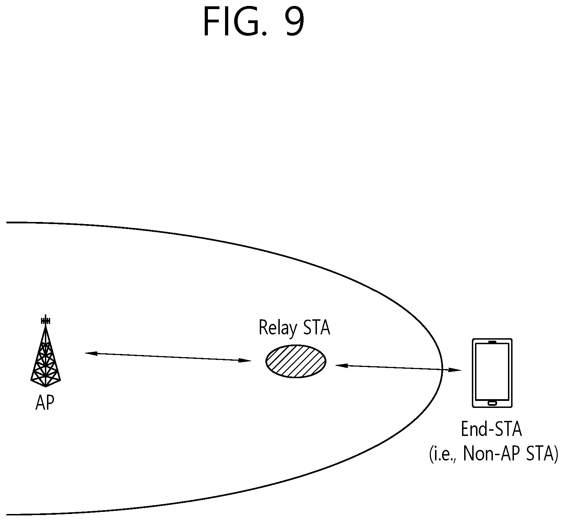

Through signal transmission and reception using a relay STA, signals can be transmitted and received to an STA existing outside the coverage of the AP, as shown in FIG. 9.

FIG. 9 shows an example of communication range extension using a relay.

Referring to FIG. 9, in the case of using a relay to transmit and receive signals with an STA existing outside the AP coverage/communication range, frames (e.g., management frames) transmitted by the AP in the BSS may be transmitted to the STA (or end STA/non-AP STA) through the relay.

Accordingly, the present disclosure proposes a frame configuration and/or a frame exchange method for extending the coverage/communication range of a BSS when transmitting and receiving signals using a relay.

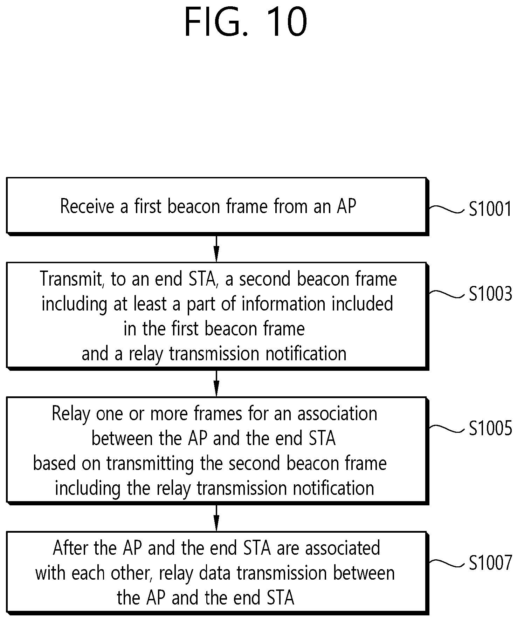

FIG. 10 shows an example of a method performed by an STA according to an embodiment of the present disclosure. The STA of FIG. 10 may be a relay STA that relays signal transmission and reception between an AP and an end STA.

Referring to FIG. 10, in step S1001, the relay STA may receive a first beacon frame from an access point (AP).

In step S1003, the relay STA may transmit, to an end STA, a second beacon frame including at least a part of information included in the first beacon frame and a relay transmission notification. The relay transmission notification informs that a frame including the relay transmission notification is transmitted by the relay STA.

In step S1005, the relay STA may relay one or more frames for an association between the AP and the end STA based on transmitting the second beacon frame including the relay transmission notification.

In step S1007, after the AP and the end STA are associated with each other, the relay STA may relay data transmission between the AP and the end STA.

According to various embodiments, the relay transmission notification may include a specific combination of a value of a To distribution system (DS) field and a value of a From DS field of the second beacon frame. For example, the specific combination may include a combination of a value 0 of the To DS field and a value 1 of the From DS field, or a combination of a value 1 of the To DS field and a value 1 of the From DS field.

According to various embodiments, the relay transmission notification includes an address field set to an ID of the relay STA in the second beacon frame.

According to various embodiments, the information included in the first beacon frame may include at least one of a relay beacon period, relay capability information, or relay operation information. The second beacon frame may include at least one of the relay beacon period, the relay capability information, or the relay operation information.

According to various embodiments, the relay beacon period may inform a period at which the second beacon frame is transmitted. The period at which the second beacon frame may be transmitted is equal to or smaller than a period at which the first beacon frame is transmitted.

According to various embodiments, the second beacon frame may be transmitted short inter-frame space (SIFS) after the first beacon frame is received. In this case, for example, a value of a duration field of the first beacon frame may be set to a value obtained by adding SIFS to a length of the first beacon frame or a value obtained by adding SIFS to twice the length of the first beacon frame. For another example, the value of the duration field of the first beacon frame may be set to 0.

According to various embodiments, the first beacon frame may include information for at least one of a transmission period or a transmission timing of the second beacon frame. The second beacon frame may be transmitted based on at least one of the transmission period or the transmission timing.

According to various embodiments, for relaying the one or more frames for the association between the AP and the end STA, the relay STA may receive, from the end STA, a first association request frame. The relay STA may transmit, to the AP, a second association request frame including at least a part of information included in the first association request frame and a relay transmission notification. The relay STA may receive, from the AP, a first association response frame. The relay STA may transmit, to the end STA, a second association response frame including at least a part of information included in the first association response frame and a relay transmission notification. The relay STA may receive, from the end STA, an acknowledgement (ACK) of the end STA for the second association response frame, and transmit it to the AP.

According to various embodiments, the end STA may not belong to a basic service set (BSS) to which the AP and the relay STA belong.

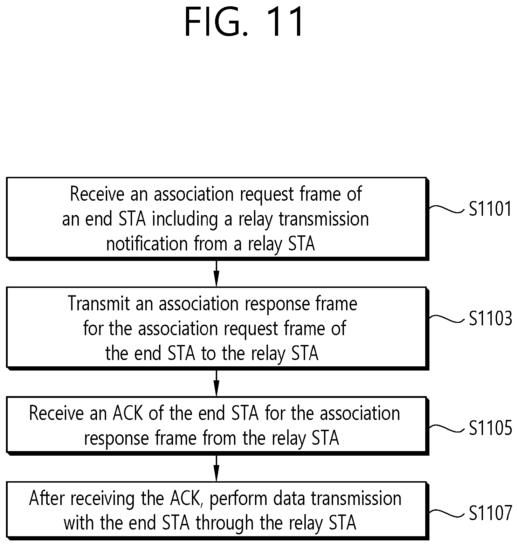

FIG. 11 shows an example of a method performed by an AP according to an embodiment of the present disclosure.

Referring to FIG. 11, in step S1101, the AP may receive an association request frame of an end STA including a relay transmission notification from a relay STA. The relay transmission notification may inform that a frame including the relay transmission notification is transmitted by the relay STA.

In step S1103, the AP may transmit an association response frame for the association request frame of the end STA to the relay STA.

In step S1105, the AP may receive an ACK of the end STA for the association response frame from the relay STA.

In step S1107, after receiving the ACK, the AP may perform data transmission with the end STA through the relay STA.

According to various embodiments, the relay transmission notification may include a specific combination of a value of a To distribution system (DS) field and a value of a From DS field of the second beacon frame. For example, the specific combination may include a combination of a value 0 of the To DS field and a value 1 of the From DS field, or a combination of a value 1 of the To DS field and a value 1 of the From DS field.

According to various embodiments, the relay transmission notification includes an address field set to an ID of the relay STA in the second beacon frame.

Hereinafter, a frame configuration and/or a frame exchange method for extending the coverage/communication range of a BSS when transmitting and receiving signals using a relay will be described in detail.

An STA existing outside the coverage/communication range (e.g., the end STA/non-AP STA of FIG. 9) cannot directly receive a beacon frame transmitted by the AP. Accordingly, the relay STA may receive the beacon frame transmitted by the AP and then transmit/broadcast it to the end STA/non-AP STA. At this time, in order to indicate that the beacon frame is transmitted by the relay STA and not the AP (i.e., a relay transmission notification), the beacon frame may be configured as follows:

- In some implementations, the settings of the To DS and From DS fields of the beacon frame transmitted by the relay STA may be used.

The relay STA, having received the beacon frame from the AP, may indicate that the beacon frame is transmitted by the relay STA (i.e., a relay transmission notification) by setting the To Ds and From DS fields to a specific combination of values (e.g., To DS = 0 & From DS = 1, or To DS = 1 & From DS = 1) when broadcasting/transmitting the received beacon frame.

As such, through the settings of the To Ds and From DS fields, ambiguity caused by STAs within the BSS receiving beacon frames redundantly can be reduced, and STAs that properly received the beacon frame within the AP coverage can ignore the relay transmission notification upon receiving the corresponding beacon frame.
- In some implementations, the setting of an address (AD) field may be used to indicate that the beacon frame is transmitted by the relay STA (i.e., a relay transmission notification).

The AD fields of the beacon frame transmitted and/or forwarded by the relay STA may be set as follows:
1) AD 1: Broadcast ID
2) AD 2: Relay STA ID
3) AD 3: BSSID (AP MAC address)
4) AP 4: Reserved, or may be the same as AD 1.

By setting AD 2 to the ID of the relay STA transmitting the beacon frame as described above, an STA receiving the beacon frame in which AD 2 is set can identify whether the corresponding frame is transmitted by the AP or the relay STA. That is, the relay transmission notification may include AD 2 set to the ID of the relay STA in the beacon frame.

For example, if To DS = 1 and From DS = 1 are set, four address fields may be available.

In addition, an AP supporting relay transmission may transmit a beacon frame including relay transmission information (e.g., relay beacon transmission information), relay capability information, and/or relay operation information. The relay beacon transmission information transmitted through the beacon frame may be configured to include a relay beacon interval/period. At this time, the relay beacon interval/period may be set to be equal to or smaller than the beacon interval/period transmitted by the AP so that the relay beacon frame is transmitted within the beacon interval/period.

The relay capability information may include at least one of the following information elements (IEs):
- relay support: may indicate whether relay transmission is supported.
- Bandwidth (BW): information on the bandwidth used for relay transmission, which may consist of information on 20/40/80/160/320 MHz.
- Modulation and coding scheme (MCS): indication of the maximum MCS allowed during relay transmission.
- Number of spatial streams (NSS): indicates the maximum number of SSs considered during relay transmission.
- Acknowledgement (ACK) policy: an ACK policy for data received during relay transmission, indicating whether it is 'immediately' or 'delayed'
- Direction: indicates whether relay transmission is accepted in DL/UL. For example, it may consist of 1 bit when considering DL or UL, and may consist of 2 bits considering DL and UL (and/or, DL&UL).
- SU/MU relay indication: indicates whether SU or MU transmission is supported during relay transmission and reception.

The relay operation information may include at least one of the following IEs:
- relay STA information: includes the relay STA ID, and if multiple relay STAs exist within the BSS, it may include an AID list of the multiple relay STAs.
- Number of relay STAs: indicates the number of relay STAs existing within the BSS.
- relay window: may include information on a timing window for performing relay transmission.
- Channel measurement for a relay link: indicates whether a channel measurement procedure between the relay STA and the non-AP STA (or, end STA/remote STA) is performed.
- Non-AP STA detection or discovery: indicates performing detection or discovery for an STA participating in relay transmission.

In order for the relay STA to transmit the beacon frame configured as described above, the relay STA must perform channel access. However, if the relay STA fails to occupy an available channel through channel access, it may not be able to transmit the beacon frame or latency may become a problem. Accordingly, in order to guarantee the beacon frame transmission of the relay STA, the transmission of the beacon frame of the relay STA may be performed in a BSS supporting relay transmission as follows (or, the following method may be considered to guarantee the beacon frame transmission of the relay STA after receiving a beacon frame in the BSS):
- In some implementations, an AP supporting a relay operation may set a value of a duration field of a transmitted beacon frame to a non-zero value when supporting a relay operation in a BSS or when relay transmission is configured.

For example, in order to guarantee the beacon frame transmission transmitted by the relay STA when supporting a relay operation/transmission, the duration field of the beacon frame transmitted by the AP may be set to beacon frame length*2+SIFS. As another example, the duration field may be set to beacon frame length+SIFS. The relay STA, having received the beacon frame set as described above, may transmit the beacon frame SIFS after receiving the beacon frame, regardless of the value of the duration field.
- In some implementations, the duration field of the beacon frame is set to 0, and in this case, the relay STA may be configured to transmit and receive the beacon frame SIFS after receiving the beacon frame.

A legacy STA that has received a beacon frame in the BSS identifies a channel state during AIFS/DIFS for channel access, and since the relay STA transmits the beacon frame SIFS after receiving the beacon frame, channel interference by the legacy STA can be prevented and beacon frame transmission can be guaranteed.
- In some implementations, information on a period and/or timing for a beacon frame transmitted by the relay STA is transmitted through the beacon frame, and the relay STA, having received the beacon frame from the AP, may transmit the beacon frame at a determined period and/or timing.

By indicating the period and/or timing information for the beacon frame transmitted by the relay STA in the BSS through the beacon frame, other STAs in the BSS do not attempt channel access or transmission when the relay STA transmits the beacon frame, and accordingly, the beacon frame transmission of the relay STA can be guaranteed.

An STA (e.g., the end STA of FIG. 9) that has received the beacon frame configured as described above through the relay STA can obtain/identify information on whether the AP supports relay transmission and information on the relay STA. The STA, having received the beacon frame transmitted by the relay STA, may transmit and receive management frames through the relay STA in order to associate with the AP through the identified relay STA. At this time, management frames transmitted through the relay STA may be configured using the above-described methods to indicate that the frames are transmitted by the relay STA (i.e., a relay transmission notification) and may be transmitted to an AP or a non-AP STA (or, an end STA).

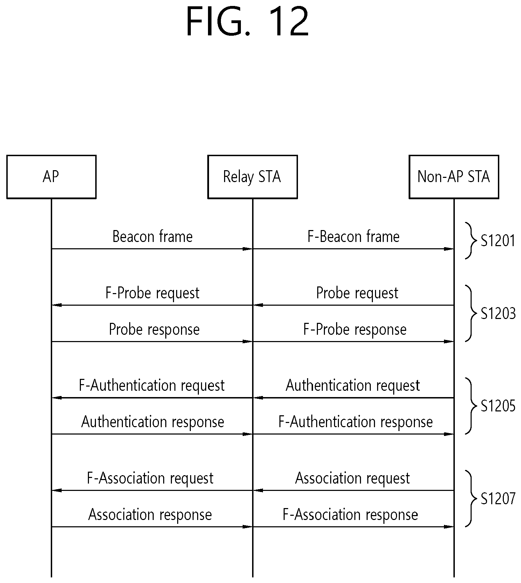

An association procedure performed based on a relay by a non-AP STA (i.e., an STA located outside the BSS coverage) that has received a beacon frame of an AP through a relay is as shown in FIG. 12.

FIG. 12 shows an example of an association procedure performed based on a relay by an STA located outside the BSS coverage according to an embodiment of the present disclosure.

Referring to FIG. 12, in step S1201, an AP supporting relay transmission may transmit a beacon frame configured as described above in the BSS. The relay STA, having received the beacon frame from the AP, transmits a beacon frame configured as described above SIFS after receiving the beacon frame. A non-AP STA (or, an end STA) located out of range (coverage/communication range) that has received the beacon frame (i.e., F-beacon frame) transmitted by the relay STA can check the existence of the AP and/or information required for transmission and reception based on the beacon frame.

In step S1203, the non-AP STA, having checked the existence of the AP based on the beacon frame transmitted by the relay STA, may perform a probing operation through the relay STA. For example, the non-AP STA may transmit a probe request frame to the relay STA. The relay STA may forward the probe request frame (i.e., may transmit an F-probe request frame) to the AP SIFS after receiving the probe request frame transmitted by the non-AP STA. The AP, having received the probe request frame (i.e., F-probe request frame) from the relay STA, may transmit a response frame (i.e., probe response frame) thereto to the relay STA. The relay STA, having received the probe response frame, may forward the probe response frame (i.e., may transmit an F-probe response frame) to the non-AP STA SIFS after receiving the probe response frame.

In some implementations, the probing operation through the relay STA such as step S1203 may be performed for each STA or may be omitted.

A frame exchange for authentication and/or association performed in advance for signal transmission and reception may be performed through the relay STA similarly to the probing operation.

For example, in step S1205, the non-AP STA transmits an authentication request frame to the relay STA, and the relay STA may forward the authentication request frame to the AP (i.e., may transmit an F-authentication request frame to the AP) SIFS after receiving the authentication request frame. The AP transmits a response frame for the authentication request frame (i.e., an authentication response frame) to the relay STA, and the relay STA may forward the authentication response frame to the non-AP STA (i.e., may transmit an F-authentication response frame to the non-AP STA) SIFS after receiving the authentication response frame.

For example, in step S1207, the non-AP STA transmits an association request frame to the relay STA, and the relay STA may forward the association request frame to the AP (i.e., may transmit an F- association request frame to the AP) SIFS after receiving the association request frame. The AP transmits a response frame for the association request frame (i.e., an association response frame) to the relay STA, and the relay STA may forward the association response frame to the non-AP STA (i.e., may transmit an F- association response frame to the non-AP STA) SIFS after receiving the association response frame.

The AP and the non-AP STA, having completed the management frame exchange through the relay STA as described above, may transmit/receive data and acknowledgement (ACK) information for the data through the relay STA using the same procedure as described above (i.e., forwarding based on a relay).

In FIG. 12, some steps and/or some frame exchanges may be omitted.

As shown in FIG. 12, when the relay STA forwards a frame (e.g., beacon frame, probe request/response frame, authentication request/response frame, association request/response frame) received from an AP or an STA, the corresponding frame may be expressed as an F-frame (e.g., F-beacon frame, F-probe request/response frame, F-authentication request/response frame, F-association request/response frame). F-frames may be configured as described above to indicate that the frames are transmitted by the relay STA (i.e., a relay transmission notification). For example, F-frames may include a relay transmission notification including a specific combination of a value of a To DS field and a value of a From DS field (e.g., a combination of a value 0 of the To DS field and a value 1 of the From DS field, or a combination of a value 1 of the To DS field and a value 1 of the From DS field), and/or an address field (e.g., AD 2) set to the ID of the relay STA.

For example, the relay STA information included in F-frames may (further) include at least one of the following IEs:
- relay STA ID/relay ID
- relay configuration information (e.g., relay capability information, relay operation information)
- relay window.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor *510* and the memory 520 of FIG. 5.

For example, the processor 111, the processing chip 114 of FIG. 1 and/or the processor *510* of FIG. 5 may be configured to execute instructions stored in the memory 112, 520 to implement the method performed by the relay STA in the present disclosure. The method comprises: receiving a first beacon frame from an access point (AP); transmitting, to an end station (STA), a second beacon frame including at least a part of information included in the first beacon frame and a relay transmission notification, wherein the relay transmission notification informs that a frame including the relay transmission notification is transmitted by a relay STA; relaying one or more frames for an association between the AP and the end STA based on transmitting the second beacon frame including the relay transmission notification; and after the AP and the end STA are associated with each other, relaying data transmission between the AP and the end STA.

For example, the processor 121 and/or processing chip 124 of FIG. 1 may be configured to execute instructions stored in the memory 122 to implement the method performed by the AP in the present disclosure. The method comprises: receiving an association request frame of an end station (STA) including a relay transmission notification from a relay STA, wherein the relay transmission notification informs that a frame including the relay transmission notification is transmitted by the relay STA; transmitting an association response frame for the association request frame of the end STA to the relay STA; receiving an acknowledgement (ACK) of the end STA for the association response frame from the relay STA; and after receiving the ACK, performing data transmission with the end STA through the relay STA.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 112 of FIG. 1, the memory 520 of FIG. 5, and/or a separate external memory/storage medium/disk. The CRM may store instructions that implement the method performed by the relay STA in the present disclosure based on being executed by a processor (e.g., the processor 111, the processing chip 114 of FIG. 1, and/or the processor *510* of FIG. 5). The method comprises: receiving a first beacon frame from an access point (AP); transmitting, to an end station (STA), a second beacon frame including at least a part of information included in the first beacon frame and a relay transmission notification, wherein the relay transmission notification informs that a frame including the relay transmission notification is transmitted by a relay STA; relaying one or more frames for an association between the AP and the end STA based on transmitting the second beacon frame including the relay transmission notification; and after the AP and the end STA are associated with each other, relaying data transmission between the AP and the end STA.

For example, the CRM may be the memory 122 of FIG. 1 and/or a separate external memory/storage medium/disk. The CRM may store instructions that implement the method performed by the AP in the present disclosure based on being executed by a processor (e.g., the processor 121 and/or the processing chip 124 of FIG. 1). The method comprises: receiving an association request frame of an end station (STA) including a relay transmission notification from a relay STA, wherein the relay transmission notification informs that a frame including the relay transmission notification is transmitted by the relay STA; transmitting an association response frame for the association request frame of the end STA to the relay STA; receiving an acknowledgement (ACK) of the end STA for the association response frame from the relay STA; and after receiving the ACK, performing data transmission with the end STA through the relay STA.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of association between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse association and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, by defining frames and frame exchanges for relay transmission, an AP can perform reliable signal transmission and reception not only for STAs within the AP coverage boundary but also for STAs located at and/or outside the boundary, while also extending throughput and/or the AP communication range.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
receiving, by a relay station (STA), a first beacon frame from an access point (AP);
transmitting, by the relay STA to an end STA, a second beacon frame including at least a part of information included in the first beacon frame and a relay transmission notification,
wherein the relay transmission notification informs that a frame including the relay transmission notification is transmitted by the relay STA;
relaying, by the relay STA, one or more frames for an association between the AP and the end STA based on transmitting the second beacon frame including the relay transmission notification; and
after the AP and the end STA are associated with each other, relaying, by the relay STA, data transmission between the AP and the end STA.

2. The method of claim 1, wherein the relay transmission notification includes a specific combination of a value of a To distribution system (DS) field and a value of a From DS field of the second beacon frame.

3. The method of claim 2, wherein the specific combination includes a combination of a value 0 of the To DS field and a value 1 of the From DS field, or a combination of a value 1 of the To DS field and a value 1 of the From DS field.

4. The method of claim 1, wherein the relay transmission notification includes an address field set to an identifier (ID) of the relay STA in the second beacon frame.

5. The method of claim 1, wherein the information included in the first beacon frame includes at least one of a relay beacon period, relay capability information, or relay operation information, and
wherein the second beacon frame includes at least one of the relay beacon period, the relay capability information, or the relay operation information.

6. The method of claim 5, wherein the relay beacon period informs a period at which the second beacon frame is transmitted, and
wherein the period at which the second beacon frame is transmitted is equal to or smaller than a period at which the first beacon frame is transmitted.

7. The method of claim 1, wherein the second beacon frame is transmitted short inter-frame space (SIFS) after the first beacon frame is received.

8. The method of claim 7, wherein a value of a duration field of the first beacon frame is set to a value obtained by adding SIFS to a length of the first beacon frame or a value obtained by adding SIFS to twice the length of the first beacon frame.

9. The method of claim 7, wherein the value of the duration field of the first beacon frame is set to 0.

10. The method of claim 1, wherein the first beacon frame includes information for at least one of a transmission period or a transmission timing of the second beacon frame, and
wherein the second beacon frame is transmitted based on at least one of the transmission period or the transmission timing.

11. The method of claim 1, wherein relaying the one or more frames for the association between the AP and the end STA comprises:
receiving, from the end STA, a first association request frame;
transmitting, to the AP, a second association request frame including at least a part of information included in the first association request frame and a relay transmission notification;
receiving, from the AP, a first association response frame;
transmitting, to the end STA, a second association response frame including at least a part of information included in the first association response frame and a relay transmission notification; and
transmitting, to the AP, an acknowledgement (ACK) of the end STA for the second association response frame.

12. The method of claim 1, wherein the end STA does not belong to a basic service set (BSS) to which the AP and the relay STA belong.

13. A relay station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
receiving a first beacon frame from an access point (AP);
transmitting, to an end STA, a second beacon frame including at least a part of information included in the first beacon frame and a relay transmission notification, wherein the relay transmission notification informs that a frame including the relay transmission notification is transmitted by the relay STA;
relaying one or more frames for an association between the AP and the end STA based on transmitting the second beacon frame including the relay transmission notification; and
after the AP and the end STA are associated with each other, relaying data transmission between the AP and the end STA.

14. An apparatus configured to operate in a wireless local area network (LAN) system, comprising:
at least one processor; and
at least one memory operatively coupled to the at least one processor,
wherein the at least one memory stores instructions that, based on being executed by the at least one processor, perform operations comprising:
receiving a first beacon frame from an access point (AP);
transmitting, to an end station (STA), a second beacon frame including at least a part of information included in the first beacon frame and a relay transmission notification, wherein the relay transmission notification informs that a frame including the relay transmission notification is transmitted by a relay STA;
relaying one or more frames for an association between the AP and the end STA based on transmitting the second beacon frame including the relay transmission notification; and
after the AP and the end STA are associated with each other, relaying data transmission between the AP and the end STA.

15. A non-transitory computer readable medium (CRM) having stored thereon a program code implementing instructions that, based on being executed by at least one processor, perform operations comprising:
receiving a first beacon frame from an access point (AP);
transmitting, to an end station (STA), a second beacon frame including at least a part of information included in the first beacon frame and a relay transmission notification, wherein the relay transmission notification informs that a frame including the relay transmission notification is transmitted by a relay STA;
relaying one or more frames for an association between the AP and the end STA based on transmitting the second beacon frame including the relay transmission notification; and
after the AP and the end STA are associated with each other, relaying data transmission between the AP and the end STA.

16. A method comprising:
receiving, by an access point (AP), an association request frame of an end station (STA) including a relay transmission notification from a relay STA,
wherein the relay transmission notification informs that a frame including the relay transmission notification is transmitted by the relay STA;
transmitting, by the AP, an association response frame for the association request frame of the end STA to the relay STA;
receiving, by the AP, an acknowledgement (ACK) of the end STA for the association response frame from the relay STA; and
after receiving the ACK, performing, by the AP, data transmission with the end STA through the relay STA.

17. An access point (AP) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
receiving an association request frame of an end station (STA) including a relay transmission notification from a relay STA,
wherein the relay transmission notification informs that a frame including the relay transmission notification is transmitted by the relay STA;
transmitting an association response frame for the association request frame of the end STA to the relay STA;
receiving an acknowledgement (ACK) of the end STA for the association response frame from the relay STA; and
after receiving the ACK, performing data transmission with the end STA through the relay STA.

18. The AP of claim 17, wherein the relay transmission notification includes a specific combination of a value of a To distribution system (DS) field and a value of a From DS field of the second beacon frame.

19. The AP of claim 18, wherein the specific combination includes a combination of a value 0 of the To DS field and a value 1 of the From DS field, or a combination of a value 1 of the To DS field and a value 1 of the From DS field.

20. The AP of claim 18, wherein the relay transmission notification includes an address field set to an identifier (ID) of the relay STA in the second beacon frame.
